# EUROPÄISCHE PATENTSCHRIFT

(11) **EP 3 054 182 B1**
(45) Veröffentlichungstag und Bekanntmachung des Hinweises auf die Patenterteilung: **14.04.2021**
(21) Anmeldenummer: 16150703.3
(22) Anmeldetag: 11.01.2016
(51) Int. Cl.: B60G 7/00, F16C 11/06, B23P 11/00

(54) **VERFAHREN ZUR HERSTELLUNG EINER FÜGEVERBINDUNG ZWISCHEN EINEM GELENKGEHÄUSE UND EINEM ANBINDUNGSBAUTEIL, SOWIE VERFAHRENSGEMÄSS HERGESTELLTES FAHRWERKBAUTEIL**
METHOD FOR PRODUCING A JOINT CONNECTION BETWEEN A JOINT HOUSING AND A CONNECTION COMPONENT AND SUSPENSION COMPONENT PRODUCED ACCORDING TO THE METHOD
PROCÉDÉ DE FABRICATION D'UNE LIAISON BOUT À BOUT ENTRE UN BOÎTIER ARTICULÉ ET UN COMPOSANT DE LIAISON ET ÉLÉMENT DE CONSTRUCTION FABRIQUÉ SELON LEDIT PROCÉDÉ

(30) Priorität: 05.02.2015 DE 102015202092
(43) Veröffentlichungstag der Anmeldung: 10.08.2016
(73) Patentinhaber: ZF Friedrichshafen AG, 88046 Friedrichshafen (DE)
(72) Erfinder: Nachbar, Frank, 49088 Osnabrück (DE); Grube, Volker, 49356 Diepholz (DE)
(74) Vertreter: ZF Friedrichshafen AG

(56) Entgegenhaltungen:
- DE-A1-102010 043 038
- FR-A1- 2 379 337
- GB-A- 1 186 376
- US-A- 6 076 247
- US-A1- 2013 125 360

## Beschreibung

Die Erfindung betrifft ein Verfahren zur Herstellung einer Fügeverbindung zwischen einem Gelenkgehäuse, insbesondere einem Kugelgelenkgehäuse, und wenigstens einem Anbindungsbauteil.

In der DE 10 2010 043 038 A1 ist ein Verfahren zur Herstellung eines Fahrwerkbauteils, das ein in ein Strukturbauteil integriertes Kugelgelenk aufweist, beschrieben. Zunächst werden das Strukturbauteil und das Kugelgelenk unabhängig voneinander gefertigt, wobei das Strukturbauteil eine als Öffnung ausgebildete Gelenkaufnahme aufweist und das Kugelgelenk eine als Gelenkgehäuse dienende Gelenkkartusche und einen darin drehbar und schwenkbar gelagerten Kugelzapfen umfasst. Danach wird das Kugelgelenk in die Gelenkaufnahme eingesetzt und die Gelenkkartusche des Kugelgelenks wird mit dem Strukturbauteil durch Laserstrahlschweißen verschweißt. Eine Verfahrensvariante sieht vor, dass zunächst nur die Gelenkkartusche mit dem Strukturbauteil fest verbunden und erst anschließend zu einem Gelenk montiert wird.

Die DE 10 2004 031 494 A1 beschreibt die Befestigung einer Kugelgelenkvorrichtung an einem Fahrwerkelement eines Kraftfahrzeugs, wobei ein das Kugelelement (Kugelzapfen) umgebende Ringgehäuse mittels Verstemmwerkzeugen mit dem Fahrwerkelement verstemmt wird

Dokument FR 2 379 337 A offenbart ein Verfahren zur Herstellung einer Fügeverbindung zwischen einem Gelenkgehäuse, insbesondere einem Kugelgelenkgehäuse, und wenigstens einem Anbindungsbauteil, mit den Schritten:
- Bereitstellen eines Rohlings für die Herstellung des Gelenkgehäuses;
- Bereitstellen des Anbindungsbauteils, wobei dieses eine als Öffnung ausgebildete Gelenkaufnahme aufweist;
- Einsetzen des Rohlings in die Gelenkaufnahme des Anbindungsbauteils; und
- umformende Herstellung des Gelenkgehäuses mittels Kaltfließpressen des eingesetzten Rohlings, wobei während des Kaltfließprozesses durch Querfließpressen und/oder Stauchen eine hinterschnittige formschlüssige Fügeverbindung zwischen dem Gelenkgehäuse und dem Anbindungsbauteil erzeugt wird.

Der Erfindung liegt die Aufgabe zugrunde, ein verbessertes Verfahren zur Herstellung einer Fügeverbindung zwischen einem Gelenkgehäuse, insbesondere einem Kugelgelenkgehäuse, und wenigstens einem Anbindungsbauteil anzugeben.

Diese Aufgabe wird gelöst durch ein erfindungsgemäßes Verfahren entsprechend den Merkmalen des Patentanspruchs 1. Bevorzugte Weiterbildungen und Ausgestaltungen ergeben sich analog für alle Erfindungsgegenstände sowohl aus den abhängigen Patentansprüchen als auch aus den nachfolgenden Erläuterungen.

Unter Kaltfließpressen wird das gezielte Umformen eines kalten Rohlings innerhalb einer formgebenden Matrize (bzw. Gesenk), wobei das Material unter der Krafteinwirkung wenigstens eines Stempels zum Fließen gebracht wird, verstanden. Unter Querfließpressen wird ein hierbei auftretender Materialfluss quer zur Wirkrichtung des Stempels verstanden, wozu in der Regel hohe Stempelkräfte erforderlich sind. Unter Stauchen wird eine nicht freie, sondern definiert innerhalb der Matrize durch Längenverringerung (in Wirkrichtung des Stempels) bewirkte lokale Querschnittsvergrößerung (quer zur Wirkrichtung des Stempels) am Rohling bzw. am Werkstück verstanden.

Bei dem Rohling handelt es sich um einen so genannten Kaltfließpressrohling, der aus einem Metallmaterial, insbesondere einem Stahl- oder Aluminiummaterial, gebildet ist. Bevorzugt handelt es sich um ein Dreh- oder Schmiedeteil, das bspw. eine rotationssymmetrische Form haben kann. Der Rohling kann eine an die Form der herzustellenden Gelenkaufnahme angelehnte Vorform aufweisen. Während des Kaltfließprozesses wird der Rohling zu dem Gelenkgehäuse, insbesondere einem kartuschenartigen Kugelgelenkgehäuse, umgeformt, wobei durch das Kaltfließpressen sowohl eine Innengeometrie als auch eine Außengeometrie erzeugt werden. Insbesondere wird das Kaltfließpressen einstufig durchgeführt, d. h. es handelt sich um einen einstufigen Kaltfließprozess, wobei auch ein mehrstufiges Kaltfließpressen bzw. ein mehrstufiger Kaltfließprozess möglich ist. Bei einem mehrstufigen Kaltfließpressen erfolgt das Einsetzen des Rohlings bevorzugt vor der ersten Umformstufe. Das Gelenkgehäuse kann in bekannter Weise einen Gelenkzapfen, insbesondere einen Kugelzapfen, aufnehmen und weist daher eine formkorrespondierende, d. h. mit der Gelenk- bzw. Kugelzapfenform korrespondierende, Innengeometrie auf. Diese Innengeometrie wird erst beim Kaltfließpressen erzeugt und ist insbesondere nachbearbeitungsfrei, d. h. bei der durch das Kaltfließpressen erzeugten Innengeometrie des Gelenkgehäuses handelt es sich bevorzugt um eine Fertig-Innengeometrie bzw. Innenendgeometrie. Selbiges kann analog für die Außengeometrie des Gelenkgehäuses gelten. Bevorzugt wird beim Kaltfließpressen ein an seinen beiden (axialen) Enden offener Hohlkörper erzeugt, der das Gelenkgehäuse bildet. Nach dem Einsetzen des Gelenkzapfens kann das Gelenkgehäuse in bekannter Weise verschlossen werden.

Bei dem Anbindungsbauteil handelt es sich um das Bauteil, an dem das herzustellende Gelenkgehäuse befestigt werden soll. Das Anbindungsbauteil dient somit als Trägerteil für die Gelenkeinrichtung. Dieses Anbindungsbauteil weist eine als Öffnung, z. B. als Durchgangsöffnung oder Durchgangsbohrung ausgebildete, Gelenkaufnahme auf, in der das Gelenkgehäuse einsitzen soll (wie bspw. aus der DE 10 2010 043 038 A1 bekannt). Bevorzugt ist das Anbindungsbauteil aus einem Metallmaterial, insbesondere einem Stahl- oder Aluminiummaterial, gebildet. Insbesondere handelt es sich um ein Guss-, Schmiede- oder Blechteil. Das Anbindungsbauteil kann auch aus einem Kunststoff- oder Kunststoffverbundmaterial gebildet sein.

Das erfindungsgemäße Verfahren sieht demnach vor, dass eine hinterschnittige formschlüssige Fügeverbindung zwischen dem Gelenkgehäuse und dem Anbindungsbauteil bereits direkt bei bzw. während der umformenden Herstellung des Gelenkgehäuses durch Kaltfließpressen des Rohlings erzeugt wird. Das Gelenkgehäuse und die Fügeverbindung mit dem Anbindungsbauteil werden sozusagen gleichzeitig erzeugt. Innerhalb des Kaltfließprozesses zur Herstellung des Gelenkgehäuses wird selbiges also zugleich derart mit dem Anbindungsbauteil verbunden, dass eine hinterschnittige form- und dabei insbesondere auch kraftschlüssige Fügeverbindung zwischen diesen beiden Bauteilen entsteht. Durch die erzeugte hinterschnittige formschlüssige Fügeverbindung wird das Gelenkgehäuse starr und untrennbar in der Gelenkaufnahme des Anbindungsbauteils gehaltert bzw. festgehalten. Dadurch wird insbesondere in axialer Richtung bzw. in Längsrichtung (die axiale Richtung bzw. Längsrichtung entspricht für gewöhnlich der Einsetzachse des Rohlings) und bevorzugt auch in Querrichtung bzw. radialer Richtung (welche sich für gewöhnlich senkrecht zur Längsrichtung erstreckt) ein Lockern und/oder Lösen bzw. Loslösen des Gelenkgehäuses verhindert. Somit wird bevorzugt sowohl in Längsrichtung als auch in Querrichtung eine form- und kraftschlüssige Fügeverbindung erzeugt.

Unter dem Begriff "hinterschnittig" wird im Sinne der Erfindung eine form- und kraftschlüssige Verbindung zwischen dem Gelenkgehäuse und dem Anbindungsbauteil verstanden. Diese hinterschnittige Verbindung wird bevorzugt durch Kaltverformen derart erzeugt, dass während des Kaltverformens verdrängtes Material des Gelenkgehäuses sich an einem Ringbund, der die Öffnung der Gelenkaufnahme des Anbindungsbauteils umgibt, sammelt und somit eine formschlüssige und kraftschlüssige Verbindung rund um den Öffnungsrand entsteht.

Die hinterschnittige formschlüssige Fügeverbindung zwischen dem Gelenkgehäuse und dem Anbindungsbauteil kann kostengünstig ohne zusätzlichen Arbeitsgang und ohne zusätzliches Fügehilfselement erzeugt werden. Hierfür werden bevorzugt der Rohling und das Anbindungsbauteil in geeigneter Weise zusammen geführt, wozu bspw. das Anbindungsbauteil in die Fertigungslinie des Gelenkgehäuses eingeschleust werden kann. Ferner ist die erfindungsgemäße Verbindungstechnik relativ unempfindlich gegenüber den Herstellungstoleranzen der Fügepartner (Anbindungsbauteil und Rohling). Zudem werden Freiheitsgrade in der Formgebung und diverse Materialkombinationen ermöglicht. So können der Rohling und das Anbindungsbauteil aus unterschiedlichen Materialien und insbesondere aus verschiedenen Metallmaterialien (bspw. aus einem Aluminiummaterial und einem Stahlmaterial) gebildet sein. Die erfindungsgemäße Verbindungstechnik hat keinen nachteiligen Einfluss auf die Gelenkfunktionen der Gelenkeinrichtung.

Mit dem erfindungsgemäßen Verfahren ist somit ein Bauteilverbund herstellbar bzw. wird ein Bauteilverbund hergestellt, der wenigstens ein Anbindungsbauteil mit wenigstens einer als Öffnung ausgebildeten Gelenkaufnahme und ein in dieser Gelenkaufnahme befestigtes Gelenkgehäuse, insbesondere ein Kugelgelenkgehäuse, aufweist. Zwischen dem Gelenkgehäuse und dem Anbindungsbauteil besteht eine umformend durch Querfließpressen und/oder Stauchen erzeugte hinterschnittige formschlüssige Fügeverbindung, vorzugsweise dergestalt, dass das Gelenkgehäuse auf beiden Seiten des Anbindungsbauteils, insbesondere umlaufend, die Öffnungsränder der Gelenkaufnahme in einer Querrichtung bzw. radialen Richtung übergreift und dadurch sowohl in Längsrichtung bzw. axialer Richtung als auch in Querrichtung bzw. radialer Richtung eine form- und kraftschlüssige Verbindung besteht. Bei diesem Bauteilverbund handelt es sich bevorzugt um ein Fahrwerkbauteil, was Gegenstand des nebengeordneten Patentanspruchs ist.

Der Rohling weist einen umlaufenden Ringbund auf, der einerseits beim Einsetzen des Rohlings in die Gelenkaufnahme des Anbindungsbauteils als Anschlag dienen kann und der andererseits während des Kaltfließpressens einer Krafteinleitung, d. h. der Einleitung von Umformkräften in den Rohling, dienen kann. Der Ringbund hat somit eine Mehrfachfunktion. Ferner ist bevorzugt vorgesehen, dass dieser Ringbund beim Kaltfließpressen unverformt bleibt, womit gemeint ist, dass dieser sich allenfalls nur unwesentlich verformt. Dieser unverformte Ringbund kann im Weiteren als (erstes) Formschlusselement fungieren, welches auf einer Seite des Anbindungsbauteils den diesseitigen Öffnungsrand der Gelenkaufnahme in Querrichtung bzw. radialer Richtung umlaufend (d. h. über den gesamten Umfang) übergreift. Beim Kaltfließpressen kann durch Querfließpressen und/oder Stauchen auf der anderen Seite des Anbindungsbauteils ein weiteres (zweites) Formschlusselement erzeugt werden, welches den anderen Öffnungsrand in Querrichtung bzw. radialer Richtung umlaufend übergreift. Das hergestellte

Gelenkgehäuse weist somit bevorzugt zwei die gegenüberliegenden Öffnungsränder der Gelenkaufnahme umlaufend übergreifende Formschlusselemente auf. Bevorzugt wird mit dem durch Querfließpressen und/oder Stauchen gebildeten und den anderen Öffnungsrand übergreifenden (zweiten) Formschlusselement in Querrichtung bzw. radialer Richtung eine geringere Öffnungsrandüberdeckung erzeugt als mit dem unverformten umlaufenden Ringbund (erstes Formschluss-element), so dass die beiden die gegenüberliegenden Öffnungsränder der Gelenkaufnahme übergreifenden Formschlusselemente in Querrichtung bzw. radialer Richtung unterschiedliche Öffnungsrandüberdeckungen haben und insofern zueinander unsymmetrisch ausgebildet sind.

Das Fahrwerkbauteil (bzw. Fahrwerkkomponente) für ein Kraftfahrzeug umfasst ein Strukturbauteil, das wenigstens eine als Öffnung, z. B. als Durchgangsöffnung, ausgebildete Gelenkaufnahme aufweist, und ein in dieser Gelenkaufnahme eingesetztes und am Strukturbauteil befestigtes Gelenkgehäuse, insbesondere ein Kugelgelenkgehäuse, für eine Gelenkeinrichtung, insbesondere eine Kugelgelenkeinrichtung. Zwischen dem Gelenkgehäuse und dem Strukturbauteil besteht eine in Anwendung des erfindungsgemäßen Verfahrens durch Querfließpressen und/oder Stauchen erzeugte hinterschnittige formschlüssige Fügeverbindung, dergestalt, dass das Gelenkgehäuse Formschlusselemente aufweist, die auf beiden Seiten des Strukturbauteils die Öffnungsränder der Gelenkaufnahme umlaufend übergreifen. Sowohl in Längsrichtung bzw. axialer Richtung als auch in Querrichtung bzw. radialer Richtung besteht eine feste und unlösbare form- und kraftschlüssige Verbindung zwischen dem Gelenkgehäuse und dem Strukturbauteil, wobei das Strukturbauteil als Anbindungsbauteil für das Gelenkgehäuse fungiert. Bevorzugt ist vorgesehen, dass analog zu den vorausgehenden Erläuterungen die die Öffnungsränder der Gelenkaufnahme übergreifenden Formschlusselemente des Gelenkgehäuses in Querrichtung bzw. radialer Richtung unterschiedliche Öffnungsrandüberdeckungen aufweisen.

Das Fahrwerkbauteil kann auch wenigstens eine Gelenkeinrichtung, insbesondere eine Kugelgelenkeinrichtung, aufweisen, die durch das am Strukturbauteil befestigte Gelenkgehäuse und einen darin aufgenommenen Gelenkzapfen, insbesondere einen Kugelgelenkzapfen, gebildet ist, gegebenenfalls zuzüglich weiterer Einzelteile (wie bspw. eine Gelenk- bzw. Lagerschale, ein Dichtungsbalg, etc.). Das Fahrwerkbauteil weist also wenigstens eine montierte Gelenkeinrichtung auf.

Die Erfindung wird nachfolgend mit Bezug auf die Figuren beispielhaft und in nicht einschränkender Weise näher erläutert. Die in den Figuren gezeigten und/oder nachfolgend erläuterten Merkmale können, auch losgelöst von konkreten Merkmalskombinationen, die Erfindung weiterbilden.
Fig. 1 zeigt in einer perspektivischen Darstellung ein Fahrwerkbauteil.
Fig. 2 veranschaulicht in mehreren schematischen Schnittansichten die Herstellung des in Fig. 1 gezeigten Fahrwerkbauteils.
Fig. 3 zeigt in einer perspektivischen Darstellung ein anderes Fahrwerkbauteil.

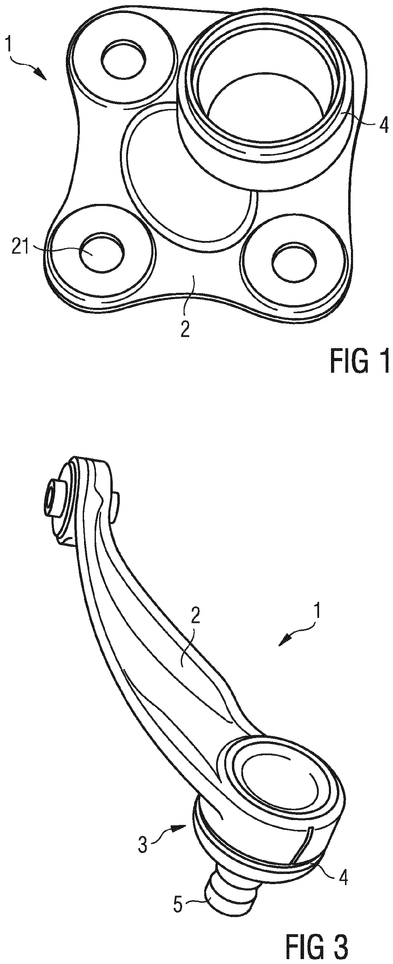

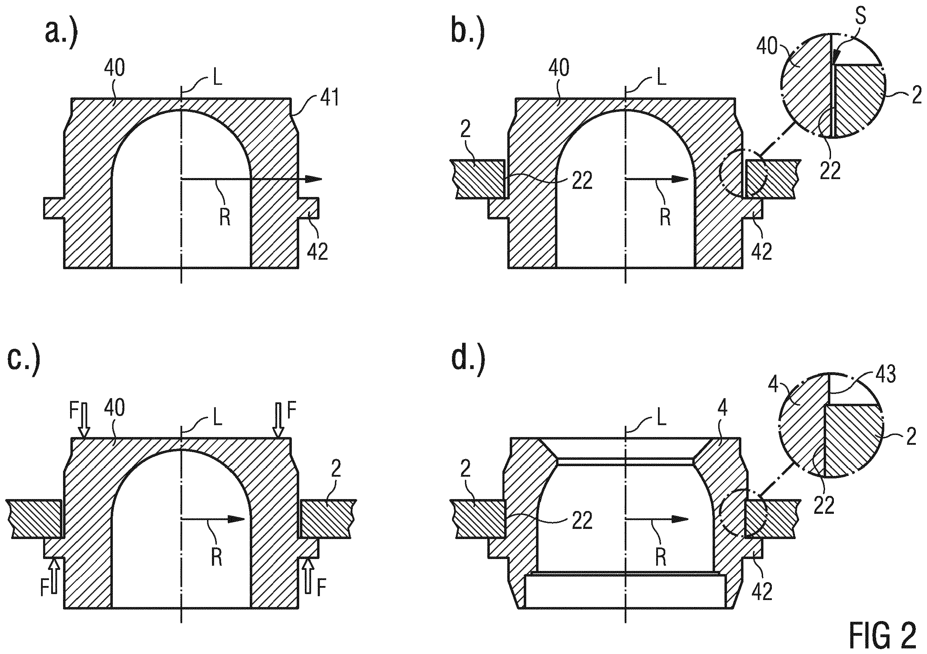

Bei dem in Fig. 1 gezeigten Fahrwerkbauteil 1 handelt es sich um ein so genanntes Flanschgelenk, das ein als Flansch mit mehreren Durchgangslöchern 21 ausgebildetes Strukturbauteil 2 und ein daran befestigtes Kugelgelenkgehäuse 4 aufweist. Zwischen dem Kugelgelenkgehäuse 4 und dem als Anbindungsbauteil fungierenden Strukturbauteil 2 besteht eine hinterschnittige formschlüssige Fügeverbindung, deren Herstellung nachfolgend anhand Fig. 2 erläutert wird.

Fig. 2a zeigt einen rotationssymmetrischen Rohling 40 für die Herstellung des Kugelgelenkgehäuses 4. Der Rohling 40 weist eine der Längsrichtung entspreche Längsachse L auf. Die sich senkrecht zu dieser Längsachse L erstreckende Querrichtung bzw. radiale Richtung ist mit R angegeben. Das herzustellende Kugelgelenkgehäuse 4 weist selbige Achsen und Richtungen auf. Der sacklochartige Rohling 40 hat eine für den nachfolgenden Kaltfließpressvorgang geeignete Vorform und ist an seiner Au ßenumfangsfläche mit einem umlaufenden Ringbund 42 ausgebildet. Das Strukturbauteil 2 weist eine als formkorrespondierendes Durchgangsöffnung ausgebildete Gelenkaufnahme 22 auf, in das der Rohling 40 eingesetzt wird, bis der umlaufende Ringbund 42 in axialer Richtung L am Strukturbauteil 2 anschlägt bzw. anliegt, wie in Fig. 2b gezeigt. Eine Fase 41 am Rohling 40 und ein Ringspalt S (der z. B. ein radiales Spaltmaß von bis zu wenigen Zehntel Millimetern aufweisen kann) begünstigen ein einfaches und verkantungsfreies Einsetzen des Rohlings 40 bzw. Aufsetzen des Strukturbauteils 2.

Nachfolgend wird der eingesetzte Rohling 40 durch einstufiges oder gegebenenfalls auch mehrstufiges Kaltfließpressen zu dem Kugelgelenkgehäuse 4 umgeformt. Während des Kaltfließprozesses wird durch Querfließpressen und/oder Stauchen eine hinterschnittige formschlüssige Fügeverbindung zwischen dem hergestellten Kugelgelenkgehäuse 4 und dem Strukturbauteil 2 erzeugt, wie in Fig. 2d gezeigt. Hierbei dient auch der Ringbund 42 der Einleitung von Umformkräften, wie in Fig. 2c mit den Pfeilen F veranschaulicht. Der Ringbund 42 bleibt beim Kaltfließpressen im Wesentlichen unverformt und dient später als Formschlusselement, welches auf einer Seite (gemäß Darstellung der unteren Seite) den Öffnungsrand der Gelenkaufnahme 22 in Querrichtung bzw. radialer Richtung R umlaufend übergreift. Beim Kaltfließpressen wird infolge der eingeleiteten Kräfte F durch einen Querließpress- und/oder Stauchvorgang auch auf der anderen Seite (gemäß Darstellung der oberen Seite) ein den Öffnungsrand der Gelenkaufnahme 22 in Querrichtung bzw. radialer Richtung R umlaufend übergreifendes Formschlusselement 43 erzeugt. Beim Kaltfließpressen wird sozusagen der andere (obere) Öffnungsrand in Querrichtung bzw. radialer Richtung R überformt, wobei jedoch in Bezug auf den Ringbund 42 eine geringere, allerdings für die Formschlussfunktion ausreichende Öffnungsrandüberdeckung erzeugt wird.

Das hergestellte Kugelgelenkgehäuse 4 weist schließlich zwei Formschlusselemente 42 und 43 auf, die auf beiden Seiten des Strukturbauteils 2 die Öffnungsränder der Gelenkaufnahme 22 umlaufend übergreifen, so dass sowohl in Längsrichtung L als auch in Querrichtung R eine form- und kraftschlüssige Verbindung besteht (siehe Fig. 2d). Die beiden Formschlusselemente 42 und 43 sind in axialer Richtung L entsprechend der Dicke des Strukturbauteils 2 an der Gelenkaufnahme 22 voneinander beabstandet und weisen in Querrichtung bzw. radialer Richtung R verschiedene Erstreckungen auf, so dass sich an den gegenüberliegenden Öffnungsrändern der Gelenkaufnahme 22 unterschiedliche Öffnungsrandüberdeckungen ergeben. Bezüglich ihrer radialen Erstreckungen sind die beiden Formschlusselemente 42 und 43 des Kugelgelenkgehäuses 4 zueinander unsymmetrisch ausgebildet.

Das durch Kaltfließpressen hergestellte und im Wesentlichen Endgeometrie aufweisende Kugelgelenkgehäuse 4 wird schon bei seiner Herstellung fest mit dem Strukturbauteil 2 verbunden, wobei die Fügeverbindung gewichtsneutral, äußerst belastbar, dauerfest und korrosionsunanfällig ist. Zudem ist diese Fügeverbindung kostengünstig herstellbar. Die Verbindung erfolgt weder durch einen einfachen Presssitz noch durch einen mittels Biegen oder Bördeln erzeugten Formschluss, sondern durch einen erfindungsgemäß bereits bei der Herstellung des Kugelgelenkgehäuses 4 mittels Querfließpressen oder mittels Stauchen oder mittels Querfließpressen und Stauchen erzeugten hinterschnittigen Formschluss.

Das Kugelgelenkgehäuse 4 und das Strukturbauteil 2 können aus unterschiedlichen Materialien (bspw. Stahl und Aluminium) gebildet sein. Bei dem in Fig. 1 und Fig. 2 gezeigten Kugelgelenkgehäuse 4 handelt es sich um einen im Wesentlichen rotationssymmetrischen Hohlkörper, der an seinen beiden axialen Enden offen ist und eine im Wesentlichen fertige Innen- und Außengeometrie aufweist. Nach dem Einsetzen eines Kugelzapfens kann das Kugelgelenkgehäuse 4 in bekannter Weise verschlossen werden, bspw. durch Anformen eines einwärts weisenden Kragens und/oder durch Aufsetzen eines Deckels (gemäß Darstellung wird der Kugelzapfen von unten eingesetzt und ragt nach oben heraus).

Bei dem in Fig. 3 gezeigten Fahrwerkbauteil 1 handelt es sich um einen Querträger, der ein als Trägerarm ausgebildetes Strukturbauteil 2 und eine daran befestigte Gelenkeinrichtung 3 aufweist. In dem gezeigten Beispiel handelt es sich bei der Gelenkeinrichtung 3 um eine Kugelgelenkeinrichtung. Die Gelenkeinrichtung 3 umfasst ein Gelenkgehäuse bzw. Kugelgelenkgehäuse 4 und einen darin gelagerten Gelenkzapfen bzw. Kugelgelenkzapfen 5, wobei das Gelenkgehäuse 4 in der zuvor erläuterten Weise mit dem Trägerarm bzw. Strukturbauteil 2 verbunden ist.

Bezugszeichen
- 1: Fahrwerkbauteil
- 2: Anbindungsbauteil, Strukturbauteil
- 21: Durchgangsöffnung
- 22: Gelenkaufnahme
- 3: Gelenkeinrichtung
- 4: Gelenkgehäuse
- 40: Rohling
- 41: Fase
- 42: Ringbund, Formschlusselement
- 43: Formschlusselement
- 5: Gelenkzapfen
- F: Umformkräfte
- L: Längsachse, Längsrichtung
- R: Querrichtung, radiale Richtung
- S: Ringspalt

## Patentansprüche

1. Verfahren zur Herstellung einer Fügeverbindung zwischen einem Gelenkgehäuse (4), insbesondere einem Kugelgelenkgehäuse, und wenigstens einem Anbindungsbauteil (2), mit den Schritten:
- Bereitstellen eines Rohlings (40) für die Herstellung des Gelenkgehäuses (4), wobei der Rohling (40) eine Fase (41) aufweist;
- Bereitstellen des Anbindungsbauteils (2), wobei dieses eine als Öffnung ausgebildete Gelenkaufnahme (22) aufweist;
- Einsetzen des Rohlings (40) in die Gelenkaufnahme (22) des Anbindungsbauteils (2), wobei zwischen dem Rohling (4) und dem Anbindungsbauteil (2) ein Ringspalt (S) besteht;
wobei der Rohling (40) einen umlaufenden Ringbund (42) aufweist, der einerseits beim Einsetzen in die Gelenkaufnahme (22) des Anbindungsbauteils (2) als Anschlag dient und der andererseits während des Kaltfließpressens einer Krafteinleitung (F) dient und
- umformende Herstellung des Gelenkgehäuses (4) mittels Kaltfließpressen des eingesetzten Rohlings (40), wobei während des Kaltfließprozesses durch Querfließpressen und/oder Stauchen eine hinterschnittige formschlüssige Fügeverbindung zwischen dem Gelenkgehäuse (4) und dem Anbindungsbauteil (2) erzeugt wird.

2. Verfahren nach Anspruch 1, **dadurch gekennzeichnet, dass** das Kaltfließpressen einstufig durchgeführt wird.

3. Verfahren nach Anspruch 1, **dadurch gekennzeichnet, dass** der Ringbund (42) beim Kaltfließpressen unverformt bleibt und als Formschlusselement, welches auf einer Seite des Anbindungsbauteils (2) den Öffnungsrand der Gelenkaufnahme (22) umlaufend übergreift, fungiert, und dass beim Kaltfließpressen durch Querfließpressen und/oder Stauchen auf der anderen Seite des Anbindungsbauteils (2) ein weiteres den anderen Öffnungsrand umlaufend übergreifendes Formschlusselement (43) erzeugt wird.

4. Verfahren nach Anspruch 3, **dadurch gekennzeichnet, dass** mit dem den anderen Öffnungsrand übergreifenden Formschlusselement (43) eine geringere Öffnungsrandüberdeckung erzeugt wird als mit dem umlaufenden Ringbund (42).

5. Verfahren nach einem der vorausgehenden Ansprüche, **dadurch gekennzeichnet, dass** beim Kaltfließpressen ein an seinen beiden Enden offener Hohlkörper (4) erzeugt wird.

6. Verfahren nach einem der vorausgehenden Ansprüche, **dadurch gekennzeichnet, dass** der Rohling (40) und das Anbindungsbauteil (2) aus unterschiedlichen Materialien gebildet sind.

## Claims

1. Method for producing a join connection between a joint housing (4), in particular a ball joint housing, and at least one linking component (2), said method comprising the following steps:
- providing a blank (40) for the production of the joint housing (4), wherein the blank (40) has a chamfer (41);
- providing the linking component (2), wherein the latter has a joint receptacle (22) which is configured as an opening;
- inserting the blank (40) into the joint receptacle (22) of the linking component (2), wherein an annular gap (S) exists between the blank (4) and the linking component (2);
wherein the blank (40) has an encircling annular bead (42) which when inserted into the joint receptacle (22) of the linking component (2) serves as a detent, on the one hand, and during the cold extrusion serves for introducing a force (F), on the other hand; and
- producing the joint housing (4) by forming, by means of cold-extruding the inserted blank (40), wherein an undercut form-fitting join connection between the joint housing (4) and the linking component (2) is generated by lateral extrusion and/or compression during the cold extrusion process.

2. Method according to Claim 1, **characterized in that** the cold extrusion is carried out in one stage.

3. Method according to Claim 1, **characterized in that** the annular bead (42) remains without forming during the cold extrusion and functions as a form-fitting element which on one side of the linking component (2) engages in an encircling manner over the opening rim of the joint receptacle (22), and **in that**, during the cold extrusion, a further form-fitting element (43) which engages in an encircling manner over the other opening rim is generated by lateral extrusion and/or compression on the other side of the linking component (2).

4. Method according to Claim 3, **characterized in that** a smaller overlap of the opening rim is achieved with the form-fitting element (43) that engages over the other opening rim than with the encircling annular bead (42).

5. Method according to one of the preceding claims, **characterized in that** a hollow body (4) which is open at both ends thereof is generated during the cold extrusion.

6. Method according to one of the preceding claims, **characterized in that** the blank (40) and the linking component (2) are formed from dissimilar materials.

## Revendications

1. Procédé permettant de réaliser un assemblage jointif entre un boîtier d'articulation (4), en particulier un boîtier d'articulation sphérique, et au moins un composant de raccordement (2), comprenant les étapes consistant à :
- fournir une ébauche (40) pour la fabrication du boîtier d'articulation (4), l'ébauche (40) présentant un chanfrein (41) ;
- fournir le composant de raccordement (2), celui-ci présentant un logement d'articulation (22) réalisé sous forme d'ouverture ;
- insérer l'ébauche (40) dans le logement d'articulation (22) du composant de raccordement (2), un espace annulaire (S) existant entre l'ébauche (4) et le composant de raccordement (2) ;
l'ébauche (40) présentant une collerette annulaire périphérique (42) qui sert d'une part de butée lors de l'insertion dans le logement d'articulation (22) du composant de raccordement (2), et qui sert d'autre part à l'introduction d'une force (F) pendant l'extrusion à froid, et
- fabriquer sans enlèvement de copeaux le boîtier d'articulation (4) par extrusion à froid de l'ébauche insérée (40), dans lequel, pendant le processus d'extrusion à froid, un assemblage jointif par complémentarité de forme et à contre-dépouille est créé entre le boîtier d'articulation (4) et le composant de raccordement (2) par extrusion latérale et/ou par refoulement.

2. Procédé selon la revendication 1, **caractérisé en ce que** l'extrusion à froid est effectuée en une étape.

3. Procédé selon la revendication 1, **caractérisé en ce que** la collerette annulaire (42) n'est pas déformée lors de l'extrusion à froid, et sert d'élément à complémentarité de forme qui dépasse de manière périphérique du bord d'ouverture du logement d'articulation (22) sur un côté du composant de raccordement (2), et **en ce que** lors de l'extrusion à froid, de l'autre côté du composant de raccordement (2), un autre élément à complémentarité de forme (43) dépassant de manière périphérique de l'autre bord d'ouverture est créé par extrusion latérale et/ou par refoulement.

4. Procédé selon la revendication 3, **caractérisé en ce que** l'autre élément à complémentarité de forme (43) dépassant de l'autre bord d'ouverture crée un recouvrement de bord d'ouverture inférieur à celui de la collerette annulaire périphérique (42).

5. Procédé selon l'une quelconque des revendications précédentes, **caractérisé en ce qu'**un corps creux (4) ouvert aux deux extrémités de celui-ci est créé lors de l'extrusion à froid.

6. Procédé selon l'une quelconque des revendications précédentes, **caractérisé en ce que** l'ébauche (40) et le composant de raccordement (2) sont formés à partir de matériaux différents.
